# EUROPÄISCHE PATENTSCHRIFT

(11) **EP 0 905 993 B1**
(45) Veröffentlichungstag und Bekanntmachung des Hinweises auf die Patenterteilung: **11.05.2005**
(21) Anmeldenummer: 98117795.9
(22) Anmeldetag: 18.09.1998
(51) Int. Cl.: H04B 10/10, H04Q 11/04, H04Q 11/00

(54) **Verfahren zum leitungslosen Übermitteln von Datenströmen in Breitbandnetzen**
Method for wireless transmission of data streams in broadband networks
Procédé de transmission sans fil de trains de données dans des réseaux à large bande

(30) Priorität: 30.09.1997 DE 19743229
(43) Veröffentlichungstag der Anmeldung: 31.03.1999
(73) Patentinhaber: SIEMENS AKTIENGESELLSCHAFT, 80333 München (DE)
(72) Erfinder: Eichinger, Josef, 80637 München (DE); Halfmann, Rüdiger, 67697 Otterberg (DE); Liegl, Werner, 85247 Schwabhausen (DE)

(56) Entgegenhaltungen:
- WO-A-95/32567
- WO-A-97/37445
- WO-A-98/32250
- US-A- 3 751 670
- US-A- 4 504 122
- SCHREIBER W F: "A unified approach to moving-image coding for most media and most applications" SIGNAL PROCESSING. EUROPEAN JOURNAL DEVOTED TO THE METHODS AND APPLICATIONS OF SIGNAL PROCESSING,NL,ELSEVIER SCIENCE PUBLISHERS B.V. AMSTERDAM, Bd. 43, Nr. 3, 1. Mai 1995 (1995-05-01), Seiten 305-321, XP004011772 ISSN: 0165-1684
- REISS M: "DRAHTLOS ZUM FREIZEICHEN FLEXIBLES RLL-SYSTEM DECTLINK ERMOGLICHT SCHNELLEN UND WIRTSCHAFLICHEN TEILNEHMERANSCHLUSS UBER FUNK AN OFFENTLICHES TELEFONNETZ" TELCOM REPORT,DE,SIEMENS AG. MUNCHEN, Bd. 18, Nr. 1, 1. Januar 1995 (1995-01-01), Seiten 34-37, XP000491917 ISSN: 0344-4724
- HUNT R: "ATM -- protocols and architecture" COMPUTER COMMUNICATIONS,NL,ELSEVIER SCIENCE PUBLISHERS BV, AMSTERDAM, Bd. 19, Nr. 6, 1. Juni 1996 (1996-06-01), Seiten 597-611, XP004052746 ISSN: 0140-3664

## Beschreibung

Die zunehmende Nutzakzeptanz sowie der technologische Fortschritt bei der Entwicklung neuer Breitbanddienste - auch als Multimedia-Dienste bezeichnet - führen zu einem zunehmenden Bedarf an breitbandigen Übertragungsressourcen in bereits bestehenden oder neu zu installierenden Kommunikationsnetzen. Um breitbandige Anwendungen, insbesondere hohe Datenübertragungsraten beanspruchende Multimedia-Dienste - z.B. Sprach-, Konferenz- und Daten-Dienste für die kommerzielle Nutzung sowie für den privaten oder freizeitorientierten Bereich - z.B. "Video on demand", "Teleshopping", "Telebanking" oder "interaktive Spiele" - effektiv und wirtschaftlich zu realisieren, ist ein breitbandiges Kommunikationsnetzwerk, insbesondere ein Übertragungsressourcen bereitstellendes Zubringernetzwerk - auch als ACCESS-Netzwerk oder "Local-loop" bezeichnet - erforderlich. In aktuell installierten Zubringernetzen werden die zur Verfügung stehenden Übertragungsressourcen auf die daran angeschlossenen Netzabschlußeinheiten bzw. auf die mit den Netzabschlußeinheiten verbundenen Kommunikationsendgeräte aufgeteilt, wobei das gemeinsam genutzte Übertragungsmedium durch einen Lichtwellenleiter oder durch zweiadrige Kupferleitungen oder durch Koaxkabel oder durch mehrere drahtlose Funkkanäle realisiert ist.

Bei drahtlosen Funk-Kommunikationsnetzen, insbesondere bei durch drahtlose Funkkanäle realisierten Zubringernetzen - auch als "Radio in the local loop" bzw. "RLL" bezeichnet - sind mehrere Netzabschlußeinheiten jeweils über einen oder mehrere Funkkanäle an eine Basisstation - auch als "radio base station" bzw. "RBS" bezeichnet - angeschlossen. Im telcom report Nr. 18 (1995) Heft 1 "Drahtlos zum Freizeichen", Seite 36, 37 ist beispielsweise ein drahtloses Zubringernetz für die drahtlose Sprach- und Datenkommunikation beschrieben. Das beschriebene Kommunikationssystem stellt einen RLL-Teilnehmeranschluß in Kombination mit moderner Breitband-Infrastruktur - z.B. "fiber to the curb" - dar, welches in kurzer Zeit und ohne größeren Aufwand für die Verlegung von drahtgebundenen Anschlußleitungen realisierbar ist. Die dargestellten, den einzelnen Teilnehmern zugeordneten Netzabschlußeinheiten RNT sind über das Übertragungsmedium "Funkkanal" und die Basisstation RBS an ein übergeordnetes Kommunikationsnetz, beispielsweise an das ISDN-orientierte Festnetz, angeschlossen. Die drahtlosen Funkkanäle können beispielsweise mit Hilfe schmalbandiger Funkstandards- z.B. DECT- oder CDMA- realisiert sein. Bei Anschluß von gemäß schmalbandiger Funkstandards ausgestalteter Zubringernetze an ein ISDN-orientiertes Festnetz, insbesondere an ein leitungsgebundenes, übergeordnetes Kommunikationsnetz, können die vorhandenen ISDN-B-Kanäle des Festnetzes mit jeweils einer Übertragungsrate von 64 KBit/s genutzt werden. Bei aktuellen drahtlosen Zubringernetzen ist jedoch für eine über das drahtlose Übertragungsmedium "Funkkanal" aufgebaute Verbindung nur eine maximale Datenübertragungsrate von 64 KBit/s vorgesehen. Für zukünftige Breitbandanwendungen, beispielsweise für die Bereitstellung von Multimedia-Diensten, sind jedoch erheblich höhere Übertragungskapazitäten, bzw. Übertragungsressourcen in den aktuellen, drahtlosen Zubringernetzen erforderlich.

Nachteilig werden die in drahtlosen Funk-Kommunikationsnetzen realisierten Zugriffsverfahren insbesondere durch den "Mehrwege-Effekt" beeinflußt, d.h. neben der direkten Verbindung zwischen der Basisstation und den Netzabschlußeinheiten sind mehrere indirekte, drahtlose Verbindungen aufgrund von Streuung, Reflexion oder Brechung der elektromagnetischen Wellen möglich - insbesondere bei Abschattung der direkten Verbindung. Des Weiteren ist das Übertragungsmedium "Funkkanal" wegen der sich verändernden Umgebungsbedingungen - beispielsweise durch bewegte Reflektoren - zeitinvariant - auch als "fading" bezeichnet - und auf Grund der vielfältigen Ausbreitungsmöglichkeiten des Funksignals zwischen der Basisstation und den einzelnen Netzabschlußeinheiten frequenzselektiv. Die Frequenzselektivität des Übertragungsmediums "Funkkanal" äußert sich im Zeitbereich durch ein Überlappen der gesendeten Datensymbole oder -Bits, was auch als Intersymbolinterferenz bekannt ist. Des Weiteren wird bei räumlich dichter Anordnung von Netzabschlußeinheiten oder Basisstationen eine zusätzliche Störung der einzelnen Funkverbindungen verursacht - auch als "Kreuzinterferenz" bezeichnet. Die durch Kreuz- oder Intersymbolinterferenz hervorgerufenen Störungen können nur durch technisch und somit auch wirtschaftlich aufwendigen Technologien und hohen Anforderungen an die Funk-Luftschnittstelle kompensiert werden. Um hohe Übertragungsraten über das Übertragungsmedium "Funkkanal" zu erreichen, sind Funk-Frequenzen im Gigaherz-Bereich erforderlich, wobei größere Distanzen - d.h. einige hundert Meter - nur durch hohe Sendeleistungen oder durch den Einsatz von technisch und wirtschaftlich aufwendigen Richtantennen überbrückt werden können.

Des weiteren sind drahtlose Kommunikationsnetze bekannt, bei welchen von einer zentralen Kommunikationseinrichtung Informationen leitungslos über ein optisches Übertragungsmedium an mehrere dezentrale Kommunikationseinrichtungen übermittelt werden. So ist in US 3,751,670 ein ein optisches Teilnehmeranschlußsystem realisierendes Kommunikationssystem beschrieben, bei dem jeder Teilnehmer jeweils über eine separate optische Übertragungsstrecke mit einer zentralen optischen Übertragungseinrichtung zwecks Informationsübermittlung verbunden ist. Das Einrichten jeweils einer separten Übertragungsstrecke für jeden Teilnehmer ist jedoch mit einem hohem technischen und somit auch wirtschaftlichem Aufwand verbunden.

Der Erfindung liegt die Aufgabe zugrunde, Kommunikationsnetze, insbesondere Zubringernetze für die Nutzung bzw. die Bereitstellung breitbandiger, d.h. eine hohe Übertragungsrate beanspruchender Dienste bzw. Anwendungen einfach und wirtschaftlich zu erweitern und insbesondere die genannten Nachteile aktueller Funk-Kommunikationsnetze zu vermeiden. Die Aufgabe wird durch die Merkmale des Patentanspruches 1 gelöst.

Beim erfindungsgemäßen Verfahren zum Übermitteln von Datenströmen zwischen einer zentralen Breitband-Kommunikationseinrichtung und mehreren dezentralen Breitband-Kommunikationseinrichtungen werden mit einer der zentralen Breitband-Kommunikationseinrichtung zugeordneten optischen Übertragungseinrichtung die zu übermittelnden Datenströme leitungslos an die dezentralen Breitband-Kommunikationseinrichtungen optisch übermittelt. Der wesentliche Aspekt des erfindungsgemäßen Verfahrens besteht darin, dass in der zentralen, optischen Übertragungseinrichtung für die optische Übermittlung der Datenströme an die dezentralen Breitband-Kommunikationseinrichtungen nur eine optische Übertragungsstrecke vorgesehen ist und dass die optische Übertragungsstrecke durch eine optische Ablenkvorrichtung an die jeweiligen dezentralen, optischen Übertraqgungseinrichtungen im Sinne einer temporären Informationsübermittlung gesteuert wird.

Der wesentliche Vorteil des erfindungsgemäßen Verfahrens besteht darin, dass durch den Einsatz der optischen Ablenkvorrichtung, auf hohe Bitübertragungsraten aufbauende drahtlose Breitbanddienste bzw. Breitbandanwendungen auf einfache, wirtschaftliche Weise realisierbar sind. Moderne Multimedia-Dienste können ohne kostenaufwendige Verlegung von Lichtwellenleitern bzw. Kupferkabeln eingeführt werden. Des Weiteren werden durch die Nutzung des Übertragungsmediums "optische Übertragungsstrecke" die bekannten Nachteile drahtloser Funk-Kommunikationsnetze - z.B. Kreuz- und Intersymbolinterferenz - d.h. die Auswirkung von Mehrwegeeffekten auf das Übertragungsmedium "Funkkanal" vermieden. Weiterhin können über das Übertragungsmedium "optische Übertragungsstrecke" Informationen mit einer weitaus höheren Übertragungsrate über eine größere Übertragungsstrecke als über das unter anderem im Teilnehmerzugangsnetz eingesetzte Übertragungsmedium "Funkkanal" übermittelt werden. Als weiterer Vorteil wird durch den Einsatz optischer Übertragungsstrecken eine höhere Stör- und Abhörsicherheit erreicht, sowie durch das Fehlen der elektromagnetischen Felder die EMV-Problematik, d.h. eine Belastung der Umwelt durch erzeugte, elektromagnetische Felder vermieden. Des Weiteren ist für die Nutzung der Kommunikationsnetze, insbesondere der Teilnehmerzugangsnetze gemäß dem erfindungsgemäßen Verfahren keine Funkzulassung und keine wirtschaftlich aufwendige Frequenzplanung bzw. Funknetzplanung erforderlich, da ein Übersprechen in benachbarte Zellen größtenteils ausgeschlossen werden kann.

Gemäß einer vorteilhaften Ausgestaltung werden von einer dezentralen Breitband-Kommunikationseinrichtung zu übermittelnde Datenströme mit Hilfe einer dezentralen, optischen Übertragungseinrichtung leitungslos an die zentrale Breitband-Kommunikationseinrichtung optisch übermittelt - Anspruch 4. Durch die Übermittlung von Datenströmen von dezentralen Breitband-Kommunikationseinrichtungen an die zentrale Breitband-Kommunikationseinrichtung - auch als "Upstream-Richtung" bezeichnet - über das leitungslose Übertragungsmedium "optische Übertragungsstrecke" lassen sich insbesondere hochbitratige, interaktive, d.h. auf einen Rückkanal angewiesene Breitbanddienste - z.B. Internet-Zugänge und videobasierte Dienste - realisieren. Auf die bisherige Nutzung des schmalbandigen Übertragungsmediums "Telefonleitung" - beispielsweise über eine konventionelle ISDN-Verbindung - als Rückkanal kann somit verzichtet werden.

Vorteilhaft werden die von den dezentralen Breitband-Kommunikationseinrichtungen an die zentrale Breitband-Kommunikationseinrichtung optisch zu übermittelnden Datenströme gemäß einem TDMA-Zugriffsverfahren optisch übermittelt - Anspruch 5. Durch den Einsatz des TDMA-Zugriffsverfahrens wird allen dezentralen Breitband-Kommunikationseinrichtungen der Zugriff auf das gemeinsam genutzte Übertragungsmedium "optische Übertragungsstrecke" und somit ein gleichberechtigter Zugriff auf die bereitgestellten, breitbandigen und leitungslosen Übertragungsressourcen ermöglicht.

Gemäß einer vorteilhaften Ausgestaltung werden die von den dezentralen Breitband-Kommunikationseinrichtungen an die zentrale Breitband-Kommunikationseinrichtung optisch zu übermittelnden Datenströme gemäß einem Polling-Übertragungsverfahren optisch übermittelt - Anspruch 6. Gemäß dieser Ausgestaltungsvariante werden den einzelnen dezentralen Breitband-Kommunikationseinrichtungen durch Übermittlung eines optischen Signals, d.h. eines Polling-Signals, von der zentralen, optischen Übertragungseinrichtung an die entsprechenden dezentralen, optischen Übertragungseinrichtungen der Zugriff auf das gemeinsam genutzte Übertragungsmedium "optische Übertragungsstrecke" nacheinander explizit zugeteilt. Anschließend werden von der jeweiligen, den Zugriff auf das Übertragungsmedium "optische Übertragungsstrecke" innehabenden, dezentralen, optischen Übertragungseinrichtung die Informationen über die zugeteilte optische Übertragungsstrecke an die zentrale, optische Übertragungseinrichtung übermittelt.

Vorteilhaft wird eine optische Übertragungsstrecke zwischen einer dezentralen und einer zentralen sowie zwischen der zentralen und einer dezentralen optischen Übertragungseinrichtung jeweils durch ein gebündeltes, optisches Signal oder einer Lasereinrichtung gebildet - Anspruch 7. Durch diese vorteilhafte Ausgestaltung kann das erfindungsgemäße Verfahren durch den Einsatz bereits technisch ausgereifter und kostengünstig zu erwerbender optischer Übertragungseinrichtungen - z.B. Laser - auf sehr einfache und wirtschaftliche Art und Weise realisiert werden.

Um die Übertragungssicherheit und Störfestigkeit der zu übermittelnden Datenströme zu erhöhen, werden in der zentralen und dezentralen optischen Übertragungseinrichtung Redundanzdaten zur Vorwärtsfehlerkorrektur erzeugt und den an der zentralen oder den dezentralen optischen Übertragungseinrichtungen eingehenden und optisch zu übermittelnden Datenströmen hinzugefügt. Auftretende "Bitfehler" in den leitungslos und optisch übermittelten Datenströme werden mit Hilfe der Redundanzdaten korrigiert - Anspruch 8.

Weitere vorteilhafte Ausgestaltungen des erfindungsgemäßen Verfahrens sind den weiteren Ansprüchen zu entnehmen.

Im Folgenden wird das erfindungsgemäße Verfahren anhand eines Blockschaltbildes näher erläutert.

Das Blockschaltbild zeigt ein optisches Kommunikationsnetz bzw. Teilnehmerzugangsnetz ACCESS, über das mehrere Teilnehmeranschlußeinrichtungen repräsentierende, dezentrale Breitband-Kommunikationseinrichtungen DKE1...3 über eine zentrale, optische Übertragungseinrichtung OBS mit einem übergeordneten Kommunikationsnetz IKN verbunden sind. Die zentrale optische Übertragungseinrichtung OBS stellt beispielsweise eine das Zentrum eines optischen Übertragungsbereiches OB repräsentierende, optische Basisstation dar, welche zumindest temporär jeweils über das Übertragungsmedium "optische Übertragungsstrecke" OS mit einer dezentralen, optischen Netzabschlußeinheit, bzw. dezentralen Übertragungseinrichtung ONT1...3 leitungslos verbunden ist. Die jeweils einer dezentralen Breitband-Kommunikationseinrichtung DKE1...3 zugeordneten, dezentralen, optischen Übertragungseinrichtungen ONT1...3 weisen jeweils Sichtverbindung zu der zentralen, optischen Übertragungseinrichtung OBS auf. Eine dezentrale Breitband-Kommunikationseinrichtung DKE1...3 kann beispielsweise durch ein oder mehrere Multimedia-Kommunikationsendgeräte oder durch ein oder mehrere ISDN-orientierte Fernsprechendgeräte realisiert sein. Die dezentralen und die zentrale, optische Übertragungseinrichtung ONT1...3,OBS weisen jeweils eine optische Sende- und Empfangseinrichtung OSE zum Senden und Empfangen von die zu übermittelnden Daten repräsentierenden optischen Signalen auf.

Gemäß einer ersten Ausgestaltungsvariante weist die zentrale, optische Übertragungseinrichtung OBS eine Lasereinrichtung - nicht dargestellt - zur Erzeugung eines das Übertragungsmedium "optische Übertragungsstrecke" realisierenden Laserstrahles auf, welcher vorteilhaft durch eine optische Ablenkeinrichtung - z.B. einem optischen Spiegel, nicht dargestellt - für ein bestimmtes Zeitintervall zum Aufbau einer temporären, optischen Übertragungsstrecke OS auf jeweils eine dezentrale, optische Ziel-Übertragungseinrichtung ONT1...3 gelenkt wird, wobei die optische Übertragungsstrecke OS gemäß einem Raum-/Zeit-Multiplex-Verfahren seriell in Richtung der einzelnen optischen Übertragungseinrichtungen ONT1...3 bzw. zu deren optischen Sende- und Empfangseinrichtungen OSE aufgebaut wird - auch als "Downstream"-Richtung bezeichnet. Beispielsweise sind die in "Downstream"-Richtung zu übermittelnden Informationen, bzw. ist der zu übermittelnde Datenstrom gemäß einer TDM-Struktur - Time Division Multiplex - realisiert, wobei die optische Übertragungsstrecke OS gemäß der TDM-Struktur des Datenstromes in Richtung der einzelnen optischen Übertragungseinrichtungen ONT1...3 gesteuert wird. Beispielsweise wird während einer aktiven, d.h. einer temporär aufgebauten optischen Übertragungsstrecke OS ein kopletter Zeitrahmen - auch als "Frame" bezeichnet - des TDM-strukturierten Datenstromes an die jeweilige dezentrale, optische Übertragungseinrichtung ONT1...3 übermittelt.

Gemäß einer weiteren Ausgestaltungsvariante - nicht dargestellt - ist in der zentralen, optischen Übertragungseinrichtung OBS für jede im optischen Übertragungsbereich OB angeordnete dezentrale optische Übertragungseinrichtung ONT1...3 eine separate Lasereinrichtung zum Aufbau einer separaten, optischen Übertragungsstrecke vorgesehen. Die in Downstream-Richtung zu übermittelnden Informationen werden dabei mit Hilfe eines TDM-Übertragungsverfahren - Time-Division-Multiplex - an alle dezentralen, optischen Übertragungseinrichtungen ONT1...3 übermittelt. Beim TDM-Übertragungsverfahren werden die an die dezentralen Breitband-Kommunikationseinrichtungen DKE1...3 zu übermittelnden Informationen in ein optisches Signal gemultiplext und in Downstream-Richtung über alle eingerichteten, separaten, optischen Übertragungsstrecken OS kontinuierlich gesendet. Jede einer dezentralen Breitband-Kommunikationseinrichtung DKE1...3 zugeordnete, dezentrale, optische Übertragungseinrichtung ONT1...3 empfängt den kontinuierlich ausgesendeten Datenstrom, wobei die an die jeweilige dezentrale Breitband-Kommunikationseinrichtung DKE1...3 adressierten Informationen durch die optische Übertragungseinrichtung ONT1...3 aus dem kontinuierlichen Datenstrom separiert und an die dezentrale Breitband-Kommunikationseinrichtung DKE1...3 übermittelt werden.

Die zentrale, optische Übertragungseinrichtung OBS ist über eine Verbindungsleitung VL' mit einer Basisstation-Kontrolleinrichtung OBC verbunden. Die Basisstation-Kontrolleinrichtung OBC ist über eine Kupferleitung oder einen Lichtwellenleiter oder ein Richtfunk-Zubringersystem - im Blockschaltbild durch VL angedeutet - mit einer Netzkontrolleinheit NDU verbunden, in der u.a. eine Umcodierung von Sprachund Nutzdaten sowie die Verwaltung der Übertragungsressourcen des optischen Übertragungsbereiches OB und der Übertragungsressourcen in Richtung übergeordnetes Kommunikationsnetz IKN stattfindet. Die optischen Übertragungsressourcen des jeweiligen optischen Übertragungsbereiches OB können alternativ auch in der zentralen, optischen Übertragungseinrichtung OBS oder in der Basisstation-Kontrolleinrichtung OBC verwaltet werden. Über eine standardisierte, V5-ähnliche Schnittstelle ist die Netzkontrolleinheit NDU an das übergeordnete Kommunikationsnetz IKN angeschlossen. In diesem Ausführungsbeispiel stellt das übergeordnete Kommunikationsnetz IKN ein gemäß einer Breitband-Übertragungstechnologie konzipiertes Breitband-Kommunikationsnetz dar - beispielsweise ein nach dem Asynchronen-Tranfer-Modus ATM konzipiertes ATM-Kommunikationsnetz oder ein nach der Synchronen-Digitalen-Hierarchie SDH konzipiertes SDH-Kommunikationsnetz oder ein ISDN-orientiertes Kommunikationsnetz.

Die von einer dezentralen Breitband-Kommunikationseinrichtung DKE1...3 über die entsprechende dezentrale, optische Übertragungseinrichtung ONT1...3 an die zentrale, optische Übertragungseinrichtung OBS zu übermittelnden Informationen - "Upstream"-Richtung - werden mit Hilfe eines TDMA-Zugriffsverfahrens übertragen. Beim TDMA-Zugriffsverfahren werden den eine Sendeberechtigung anfordernden optischen Übertragungseinrichtungen ONT1...3 je nach Anforderung ein oder mehrere Zeitschlitze - auch als "Slot" bezeichnet - eines übergeordneten Zeitrahmens - auch als "Frame" bezeichnet - zugeordnet, wobei nie mehr als eine dezentrale Breitband-Kommunikationseinrichtung DKE1...3 gleichzeitig sendet bzw. auf das gemeinsam genutzte Übertragungsmedium "optische Übertragungsstrecke" zugreift; d.h. immer nur eine dezentrale, optische Übertragungseinrichtung ONT1...3 innerhalb des ihr zugewiesenen Zeitschlitzes ein Lasersignal mit Hilfe der optischen Sende- und Empfangseinrichtung OSE erzeugt, bzw. eine optische Übertragungsstrecke zwischen den Sende- und Empfangsanlagen OSE der dezentralen und der zentralen optischen Übertragungseinrichtung ONT1...3 aufgebaut und die Informationen übermittelt werden.

Das im Blockschaltbild dargestellte, leitungslose Kommunikationsnetz bzw. leitungslose Teilnehmerzugangsnetz ACCESS weist beispielsweise eine optische Gesamt-Übertragungskapazität von 155 MBit/s auf, welche je nach Anforderung auf die einzelnen dezentralen Breitband-Kommunikationseinrichtungen DKE1...3 verteilt werden. Einer Breitband-Kommunikationseinrichtung DKE1...3 kann beispielsweise bis zu 50 MBit/s an optischer Übertragungskapazität für die Informationsübermittlung zur Verfügung gestellt werden. Das Kommunikationsnetz gemäß dem Ausführungsbeispiel kann beispielsweise ein interaktives Multimedia-Netz mit Rückkanal repräsentieren.

Netzbetreibern steht mit der im Ausführungsbeispiel beschriebenen Realisierung leitungsloser, optischer Übertragungsstrecken in einem nach einer Breitband-Übertragungstechnologie konzipierten Kommunikationsnetz, insbesondere in einem Teilnehmerzugangsnetz ACCESS ein wirtschaftlicher Anschluß von Breitband-Kommunikationseinrichtungen DKE1...3 an ein übergeordnetes Kommunikationsnetz IKN zur Verfügung. Die leitungslosen, optischen Übertragungsstrecken sind zusätzlich in kurzer Zeit realisierbar, da der Aufwand bzw. Zeitbedarf für das Verlegen von Kabeln und Leitungen entfällt. Vorteilhaft können gemäß dem Ausführungsbeispiel realisierte Kommunikationsnetze ACCESS räumlich parallel betrieben werden, da ein Übersprechen in benachbarte Übertragungsbereiche größtenteils ausgeschlossen und somit auf eine aufwendige Frequenz- und Funknetzplanung verzichtet werden kann. Die leitungslosen, optischen Kommunikationsnetze sind gegenüber Funknetzen störund abhörsicher.

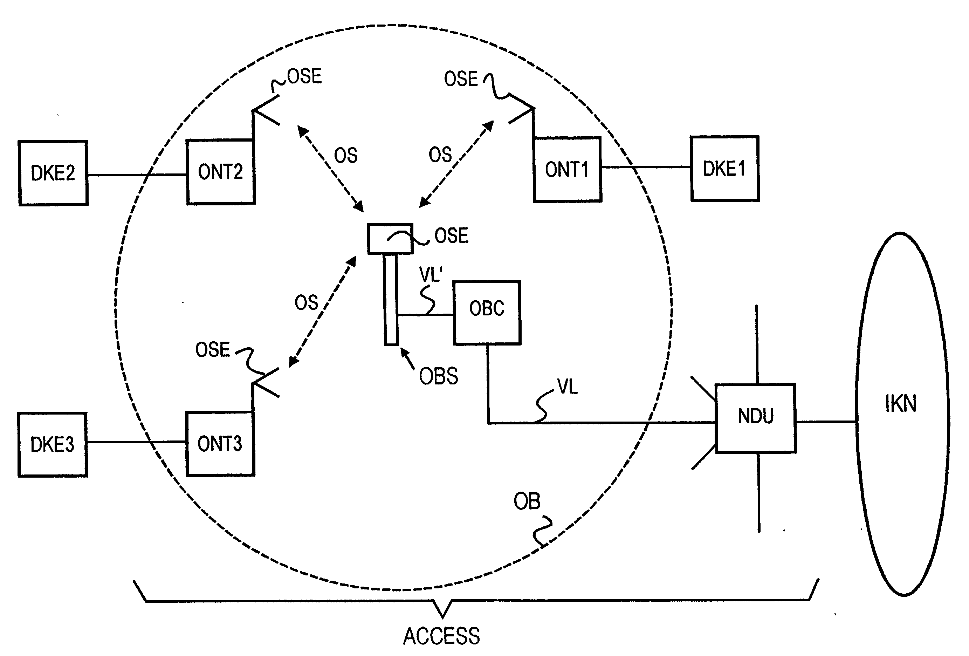

## Patentansprüche

1. Verfahren zum Übermitteln von Datenströmen zwischen einer zentralen Breitband-Kommunikationseinrichtung (NDU) und mehreren dezentralen Breitband-Kommunikationseinrichtungen (DKE1...3),
bei dem mit einer der zentralen Breitband-Kommunikationseinrichtung (NDU) zugeordneten, optischen Übertragungseinrichtung (OBS) die zu übermittelnden Datenströme leitungslos an die dezentralen Breitband-Kommunikationseinrichtungen (DKE1...3) optisch übermittelt werden,
**dadurch gekennzeichnet,**
- **dass** in der zentralen, optischen Übertragungseinrichtung (OBS) für die optische Übermittlung der Datenströme an die dezentralen Breitband-Kommunikationseinrichtungen (DKE1...3) nur eine optische Übertragungsstrecke (OS) vorgesehen ist, und
- **dass** die optische Übertragungsstrecke (OS) durch eine optische Ablenkeinrichtung an die jeweiligen dezentralen, optischen Übertragungseinrichtungen (ONT1...3) im Sinne einer temporären Informationsübermittlung gesteuert wird.

2. Verfahren nach Anspruch 1,
**dadurch gekennzeichnet,**
- **daß** die von der zentralen Breitband-Kommunikationseinrichtung (NDU) an die dezentralen Breitband-Kommunikationseinrichtungen (DKE1...3) zu übermittelnden Datenströme gemäß einer TDM-Struktur realisiert sind, und
- **daß** die optische Übertragungsstrecke (OS) mit Hilfe der optischen Ablenkeinrichtung gemäß der TDM-Struktur des Datenstromes an die jeweilige betroffene, dezentrale, optische Übertragungseinrichtung (ONT1...3) temporär gesteuert wird.

3. Verfahren nach Anspruch 2,
**dadurch gekennzeichnet,**
**daß** die optische Übertragungsstrecke (OS) mit Hilfe der optischen Ablenkeinrichtung gemäß der TDM-Struktur des Datenstromes an die jeweilige betroffene, dezentrale, optische Übertragungseinrichtung (ONT1...3) temporär gesteuert wird.

4. Verfahren nach einem der Ansprüche 1 bis 4,
**dadurch gekennzeichnet,**
**daß** von einer dezentralen Breitband-Kommunikationseinrichtung (DKE1...3) zu übermittelnde Datenströme mit Hilfe einer dezentralen, optischen Übertragungseinrichtung (ONT1...3) leitungslos an die zentrale Breitband-Kommunikationseinrichtung (NDU) optisch übermittelt werden.

5. Verfahren nach Anspruch 4,
**dadurch gekennzeichnet,**
**daß** die von den dezentralen Breitband-Kommunikationseinrichtungen (DKE1...3) an die zentrale Breitband-Kommunikationseinrichtung (NDU) optisch zu übermittelnden Datenströme gemäß einem TDMA-Zugriffsverfahren optisch übermittelt werden.

6. Verfahren nach Anspruch 4,
**dadurch gekennzeichnet,**
**daß** die von den dezentralen Breitband-Kommunikationseinrichtungen (DKE1...3) an die zentrale Breitband-Kommunikationseinrichtung (NDU) optisch zu übermittelnden Datenströme gemäß einem Polling-Übertragungsverfahren optisch übermittelt werden.

7. Verfahren nach einem der vorherigen Ansprüche,
**dadurch gekennzeichnet,**
**daß** eine optische Übertragungsstrecke (OS) zwischen einer dezentralen und der zentralen optischen Übertragungseinrichtung (ONT1...3, OBS) sowie zwischen der zentralen und einer dezentralen, optischen Übertragungseinrichtung (OBS, ONT1...3) jeweils durch ein gebündeltes, optisches Signal oder einer Lasereinrichtung gebildet wird.

8. Verfahren nach einem der vorherigen Ansprüche,
**dadurch gekennzeichnet,**
- **daß** in der zentralen und dezentralen, optischen Übertragungseinrichtung (OBS, ONT1...3) Redundanzdaten zur Vorwährtsfehlerkorrektur erzeugt und den an der zentralen oder dezentralen optischen Übertragungseinrichtung (OBS, ONT1...3) eingehenden und optisch zu übermittelnden Datenströmen hinzugefügt werden, und
- und **daß** in den leitungslos, optisch übermittelten Datenströmen auftretende Bitfehler mit Hilfe der Redundanzdaten korrigiert werden.

9. Verfahren nach einem der vorherigen Ansprüche,
**dadurch gekennzeichnet,**
**daß** in der zentralen und in den dezentralen, optischen Übertragungseinrichtungen (OBS, ONT1...3) angeordnete optische Sende- und Empfangseinheiten (OSE) durch
- Infrarot-Dioden und/oder
- Laser-Dioden
realisiert sind.

10. Verfahren nach einem der vorherigen Ansprüche,
**dadurch gekennzeichnet,**
- **daß** die zu übermittelnden Datenströme Breitband-Datenströme repräsentieren, und
- **daß** die Breitband-Datenströme gemäß der Synchronen-Digitalen-Hierarchie - SDH - oder dem Asynchronen-Transfer-Modus - ATM - strukturiert sind, und
- **daß** die zentrale und die dezentralen Breitband-Kommunikationseinrichtungen (NDU, DKE1...3) gemäß der Synchronen-Digitalen-Hierarchie - SDH - oder dem Asynchronen-Transfer-Modus - ATM - konzipiert sind.

## Claims

1. Method for transmitting data streams between of a central broadband communication device (NDU) and a number of decentralized broadband communication devices (DKE1...3),
in which with an optical transmission device (OBS) assigned to the central broadband communication device (NDU) the data streams to be transmitted can be transmitted optically to the decentralized broadband communication devices (DKE1...3),
**characterized in that**
- only one optical transmission link (OS) is provided in the central optical transmission device (OBS) for the optical transfer of the data streams to the decentralized broadband communication devices (DKE1...3), and
- the optical transmission link (OS) is directed by an optical deflection device to the relevant decentralized optical transmission device (ONT1...3) in the sense of a temporary information transfer.

2. Method according to Claim 1,
**characterized in that**
- the data streams to be transferred from the central broadband communication device (NDU) to the decentralized broadband communication device (DKE1...3) are implemented in accordance with a TDM structure, and
- the optical transmission link (OS) is temporarily directed with the aid of the optical deflection device, in accordance with the TDM structure of the data stream, to the relevant decentralized optical transmission device (ONT1...3) involved.

3. Method according to Claim 2,
**characterized in that**
- the optical transmission link (OS) is temporarily directed with the aid of the optical deflection device, in accordance with the TDM structure of the data stream, to the relevant decentralized optical transmission device (ONT1...3) involved.

4. Method in accordance with one of the Claims 1 to 4,
**characterized in that**
data streams to be transferred from a decentralized broadband communication device (DKE1...3) are optically transferred with the aid of a decentralized optical transmission device (ONT1...3) wirelessly to the central broadband communication device (NDU).

5. Method according to Claim 4,
**characterized in that**
the data streams to be transferred optically from the decentralized broadband communication devices (DKE1...3) to the central broadband communication device (NDU) are transmitted optically in accordance with a TDMA access method.

6. Method according to Claim 4,
**characterized in that**
the data streams to be transferred optically from the decentralized broadband communication devices (DKE1...3) to the central broadband communication device (NDU) are transmitted optically in accordance with a polling transmission method.

7. Method according to one of the previous claims,
**characterized in that**
an optical transmission link (OS) is formed between a decentralized and the central optical transmission device (ONT1...3, OBS) as well as between the central and a decentralized optical transmission device (OBS, ONT1...3) through a bundled optical signal or a laser device in each case.

8. Method according to one of the previous claims,
**characterized in that**
- in the central and decentralized optical transmission device (OBS, ONT1...3) redundancy data is generated for forwards error correction and inserted into the data streams arriving at the central or decentralized optical transmission device (OBS, ONT1...3) and to be transferred optically, and
- bit errors occurring in the wireless optically transmitted data streams are corrected with the aid of redundancy data.

9. Method in accordance with one of the previous claims,
**characterized in that**,
optical send and receive units arranged in the central and in the decentralized optical transmission devices (OBS, ONT1...3) (OSE) are implemented by
- Infrared diodes and/or
- Laser diodes

10. Method in accordance with one of the previous claims,
**characterized in that**,
- the data streams to be transferred represent broadband data streams, and
- the broadband data streams are structured in accordance with the Synchronous Digital Hierarchy - SDH - or the Asynchronous Transfer Mode - ATM, and
- the central and the decentralized broadband communication devices (NDU, DKE1...3) are designed in accordance with the Synchronous Digital Hierarchy - SDH - or the Asynchronous Transfer Mode - ATM.

## Revendications

1. Procédé de transmission de flux de données entre un dispositif de communication à large bande central (NDU) et plusieurs dispositifs de communication à large bande décentralisés (DKE1...3),
dans lequel les flux de données à transmettre sont transmis sans fil, par voie optique, aux dispositifs de communication à large bande décentralisés (DKE1...3) grâce à un dispositif de transmission optique (OBS) associé au dispositif de communication à large bande central (NDU),
**caractérisé**
- **en ce qu'**une seule voie de transmission optique (OS) est prévue dans le dispositif de transmission optique central (OBS) pour la transmission optique des flux de données aux dispositifs de communication à large bande décentralisés (DKE1...3), et
- **en ce que** la voie de transmission optique (OS) est dirigée par un dispositif de déviation optique sur les dispositifs de transmission optique décentralisés respectifs (ONT1...3) dans le sens d'une transmission d'informations temporaire.

2. Procédé selon la revendication 1,
**caractérisé**
- **en ce que** les flux de données devant être transmis du dispositif de communication à large bande central (NDU) aux dispositifs de communication à large bande décentralisés (DKE1...3) sont réalisés selon une structure TDM et
- **en ce que** la voie de transmission optique (OS) est dirigée de manière temporaire sur le dispositif de transmission optique décentralisé concerné respectif (ONT1...3) à l'aide du dispositif de déviation optique suivant la structure TDM du flux de données.

3. Procédé selon la revendication 2,
**caractérisé**
**en ce que** la voie de transmission optique (OS) est dirigée de manière temporaire sur le dispositif de transmission optique décentralisé concerné respectif (ONT1...3) à l'aide du dispositif de déviation optique suivant la structure TDM du flux de données.

4. Procédé selon l'une des revendications 1 à 4,
**caractérisé**
**en ce que** les flux de données devant être transmis par un dispositif de communication à large bande décentralisé (DKE1...3) sont transmis sans fil, par voie optique, au dispositif de communication à large bande central (NDU) à l'aide d'un dispositif de transmission optique décentralisé (ONT1...3).

5. Procédé selon la revendication 4,
**caractérisé**
**en ce que** les flux de données devant être transmis par voie optique des dispositifs de communication à large bande décentralisés (DKE1...3) au dispositif de communication à large bande central (NDU) sont transmis par voie optique selon un procédé d'accès TDMA.

6. Procédé selon la revendication 4,
**caractérisé**
**en ce que** les flux de données devant être transmis par voie optique des dispositifs de communication à large bande décentralisés (DKE1...3) au dispositif de communication à large bande central (NDU) sont transmis par voie optique selon un procédé de transmission avec invitation à transmettre.

7. Procédé selon l'une des revendications précédentes,
**caractérisé**
**en ce qu'**une voie de transmission optique (OS) entre un dispositif de transmission optique décentralisé et le dispositif de transmission optique central (ONT1 ...3, OBS) de même qu'entre le dispositif de transmission optique central et un dispositif de transmission optique décentralisé (OBS, ONT1...3) est formée à chaque fois par un signal optique en faisceau ou un dispositif laser.

8. Procédé selon l'une des revendications précédentes,
**caractérisé**
- **en ce que** des données de redondance pour la correction anticipée d'erreurs sont produites dans le dispositif de transmission optique central et le dispositif de transmission optique décentralisé (OBS, ONT1...3) et ajoutées aux flux de données à transmettre par voie optique qui arrivent au niveau du dispositif de transmission optique central ou du dispositif de transmission optique décentralisé (OBS, ONT1...3) et
- **en ce que** les erreurs de bits survenant dans les flux de données à transmettre sans fil par voie optique sont corrigées à l'aide des données de redondance.

9. Procédé selon l'une des revendications précédentes,
**caractérisé**
**en ce que** des unités d'émission et réception optique (OSE) situées dans le dispositif de transmission optique central et les dispositifs de transmission optique décentralisés (OBS, ONT1...3) sont réalisées grâce à
- des diodes infrarouge et/ou
- des diodes laser.

10. Procédé selon l'une des revendications précédentes,
**caractérisé**
- **en ce que** les flux de données à transmettre représentent des flux de données à large bande et
- **en ce que** les flux de données à large bande sont structurés selon la hiérarchie numérique synchrone - SDH - ou le mode de transfert asynchrone - ATM - et
- **en ce que** les dispositifs de communication à large bande central et décentralisés (NDU, DKE1...3) sont conçus selon la hiérarchie numérique synchrone - SDH - ou le mode de transfert asynchrone - ATM.
